# EUROPÄISCHE PATENTSCHRIFT

(11) **EP 1 785 790 B1**
(45) Veröffentlichungstag und Bekanntmachung des Hinweises auf die Patenterteilung: **16.07.2008**
(21) Anmeldenummer: 05024744.4
(22) Anmeldetag: 11.11.2005
(51) Int. Cl.: G05B 19/05

(54) **Speicherprogrammierbare Steuerung mit einer RFID**
Programmable logic controller comprising a RFID
Automate programmable avec une RFID

(43) Veröffentlichungstag der Anmeldung: 16.05.2007
(73) Patentinhaber: SIEMENS AKTIENGESELLSCHAFT, 80333 München (DE)
(72) Erfinder: Donderer, Markus, 92224 Amberg (DE)

(56) Entgegenhaltungen:
- EP-A- 1 291 745
- DE-A1- 19 809 075
- ZINGER D S ET AL: "Incorporating radio frequency communication into a computer integrated manufacturing test facility" INDUSTRY APPLICATIONS CONFERENCE, 1995. THIRTIETH IAS ANNUAL MEETING, IAS '95., CONFERENCE RECORD OF THE 1995 IEEE ORLANDO, FL, USA 8-12 OCT. 1995, NEW YORK, NY, USA,IEEE, US, Bd. 3, 8. Oktober 1995 (1995-10-08), Seiten 1874-1878, XP010193297 ISBN: 0-7803-3008-0

## Beschreibung

Die Erfindung bezieht sich auf ein elektrisches Gerät mit einer Logik und mit einem mit der Logik elektrisch verbundenen Speichermedium, in dem Daten gespeichert sind.

Derartige Geräte sind bekannt, wobei diesen zur Adressierung ein Stationsname zugeordnet ist. Dieser Stationsname wird nach der Konfiguration durch ein Engineering-Tool im Speichermedium des Geräts gespeichert. Weiterhin kann bei Automatisierungsgeräten ein so genanntes Typschild sowie Wartungsinformationen als Daten hinterlegt werden. Wird im Servicefall aufgrund eines Defekts das Automatisierungsgerät getauscht, so hat das neue Automatisierungsgerät zunächst keine bzw. in der Regel nicht die richtigen Daten gespeichert. In der Regel ist es dem Anwender nicht mehr möglich, die erforderlichen Daten aus dem defekten Gerät auszulesen. Im Falle eines fehlenden oder falschen Stationsnamens läuft das Gerät nicht ohne Zuhilfenahme eines Programmiergerätes und des Engineering-Tools an. Zur Lösung dieses Problems wird bisher üblicherweise ein tauschbares Medium verwendet, z.B. eine Mulitmedia-Card oder ein C-Plug. Aus dem defekten Gerät wird das Speichermedium, das den Stationsnamen enthält, entnommen und in das neue Gerät gesteckt.

Ein wechselbares Speichermedium erhöht allerdings die Herstellkosten, indem zusätzliche Steckverbinder, ein zusätzlicher Modulschacht, ggf. eine zusätzliche Leiterplatte und ein Speichermedium mit einem Gehäuse erforderlich sind. Der Kunde muss für jedes Gerät ein solches Speichermedium kaufen.

Aus der EP 1 291 745 A2 ist eine Vorrichtung und ein Verfahren zum kabellosen Programmieren bekannt.

Die Programmiereinrichtung weist eine Programmier- und eine Arbeitseinheit mit jeweils einem Datensender und Empfänger auf. Programmdaten werden von einem ersten auf ein zweites Gerät übertragen.

Der Erfindung liegt die Aufgabe zugrunde, ein elektrisches Gerät der oben genannten Art dahingehend zu verbessern, dass die Daten auch noch im Fehlerfall ausgelesen werden können.

Die Aufgabe wird durch ein elektrisches Gerät mit den Merkmalen nach Anspruch 1 gelöst.

Eine vorteilhafte Weiterbildung der Erfindung besteht, wenn die Datenverbindung die Schnittstelle aufweist, die außerhalb des Geräts zugänglich ist und zum Anschluss des Lesegeräts dient.

Besonders vorteilhaft ist es außerdem, wenn das mit einer Datenverbindung versehene Speichermedium als RFID-Transponder ausgeführt ist, aus dem gespeicherte Daten mittels des Lesegeräts über eine Funkverbindung auslesbar sind.

Zwei Ausführungsbeispiele der Erfindung werden im Folgenden anhand einer Zeichnung näher erläutert. Es zeigen:
- FIG 1: ein erfindungsgemäßes elektrisches Gerät mit einem von außen auslesbaren Speichermedium und
- FIG 2: ein erfindungsgemäßes elektrisches Gerät mit einem RFID-Transponder als Speichermedium

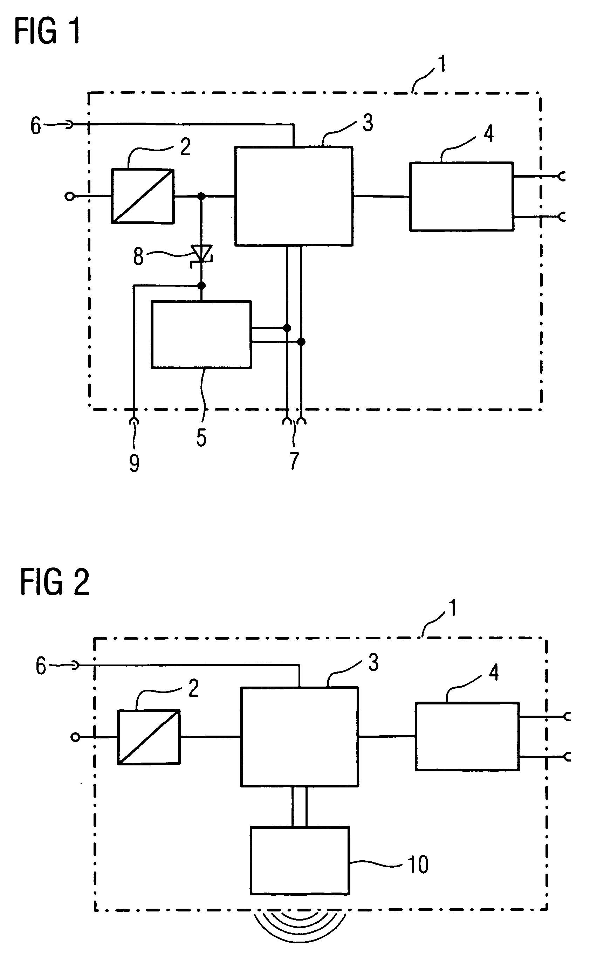

In FIG 1 ist ein elektrisches Gerät 1 dargestellt, das einen Stromwandler 2, eine mit diesem verbundene Logik 3, eine Peripherieeinheit 4 und ein Speichermedium 5 aufweist. Die Logik 3 ist sowohl mit einem Busanschluss 6 mit dem Gleichstromwandler 2 und mit der Peripherieeinheit 4 und dem Speichermedium 5 verbunden. Letztere Verbindung zwischen der Logik 3 und dem Speichermedium 5 ist an eine außerhalb des Geräts 1 zugängliche Schnittstelle 7 geführt. Das Speichermedium 5, das z.B. als serieller Festspeicher ausgeführt sein kann, ist über eine Diode 8 an den Ausgang des Stromwandlers 2 angeschlossen. Von dieser Verbindung ist ein Versorgungsanschluss 9, der ebenfalls von außen zugänglich ist, abgezweigt.

Bei einem Defekt des Stromwandlers 2, der Logik 3, oder der Peripherieeinheit 4 wird das Gerät 1 aus der Anlage entnommen und von sämtlicher Verkabelung getrennt. Über die Anschlüsse 7 und 9 kann ein Lesegerät angeschlossen werden, über das das Speichermedium 5 mit Strom versorgt wird und zugleich die Daten im Speichermedium 5 ausgelesen werden. Die ausgelesenen Informationen können dann an ein neues Gerät übertragen werden.

Im Normalbetrieb, d.h. wenn das Lesegerät nicht angeschlossen ist, wird das Speichermedium 5 über die entkoppelnde Diode 8 versorgt. Die Logik 3 des Geräts beschreibt das Speichermedium 5 in herkömmlicher Weise mit dem Stationsnamen bzw. kann der Stationsname ausgelesen werden.

Bei einem Defekt wird das Lesegerät angeschlossen. Über die Diode 8 wird sichergestellt, dass nur das Speichermedium 5 mit Spannung versorgt wird und nicht der restliche Schaltungsteil. Über die Schnittstelle 7 können die Daten im Speichermedium 5 an das Lesegerät ausgelesen werden.

Die beschriebene Lösung mit einem Lesegerät ermöglicht, dass dieses für viele gleichartige Geräte verwendet werden kann, um Daten auszulesen. Es ergibt sich gegenüber dem Einsatz eines tauschbaren Speichermediums eine erhebliche Kostenersparnis und bei einem Gerät in hoher Schutzart muss keine zusätzliche, verschließbare Öffnung für ein tauschbares Wechselmedium geschaffen werden. Je nach Typ des verwendeten Speichermediums 5 sind nur 1 bis 3 zusätzliche Pins erforderlich.

Eine weitere Lösungsvariante ist in FIG 2 dargestellt, wobei im Unterschied zum oben beschriebenen Ausführungsbeispiel lediglich ein anderes Speichermedium verwendet wird. Hier ist das mit einer Datenverbindung versehene Speichermedium als RFID-Transponder 10 ausgeführt, aus dem gespeicherte Daten mittels eines hier nicht dargestellten Lesegeräts über eine Funkverbindung in bekannter Technik auslesbar sind. Alle weiteren Bezugszeichen in FIG 2 haben dieselbe Bedeutung wie bereits oben in der Beschreibung zu FIG 1 ausgeführt.

## Patentansprüche

1. Elektrisches Gerät (1) mit einer Logik (3) und mit einem mit der Logik (3) elektrisch verbundenen Speichermedium (5), in dem Daten gespeichert sind,
**dadurch gekennzeichnet, dass** das Speichermedium (5) über eine Entkoppeldiode (8) mit einer Stromversorgungseinheit (2) verbunden ist, die das Speichermedium (5) im Normalbetrieb mit Strom versorgt und dass das Gerät (1) mindestens eine Schnittstelle (7, 9) zum Anschluss eines Lesegeräts im Falle eines Defekts, z.B. der Stromversorgungseinheit (2) oder der Logik (3), aufweist, um mit dem Lesegerät Daten aus dem Speichermedium (5) auszulesen, wobei die Entkoppeldiode (8) gewährleistet, dass das Lesegerät nur das Speichermedium (5) mit Spannung versorgt.

2. Elektrisches Gerät nach Anspruch 1,
**dadurch gekennzeichnet, dass** das Speichermedium (5, 10) mit einer Datenverbindung versehen ist, über die Daten mit Hilfe des Lesegeräts außerhalb des Geräts auslesbar sind.

3. Elektrisches Gerät nach Anspruch 1 oder 2,
**dadurch gekennzeichnet, dass** die Datenverbindung die Schnittstelle (7) aufweist, die außerhalb des Geräts (1) zugänglich ist und zum Anschluss des Lesegeräts dient.

4. Elektrisches Gerät nach einem der vorangehenden Ansprüche, **dadurch gekennzeichnet, dass** das Speichermedium als serieller Festspeicher (5) ausgeführt ist.

## Claims

1. Electrical device (1) with a logic circuit (3) and with a storage medium (5) which is electrically connected to said logic circuit (3) and in which data are stored,
**characterised in that**
the storage medium (5,10) is connected to a power supply unit (2) by way of a decoupling diode (8), said power supply unit (2) energising the storage medium (5) during normal operation and that the device (1) has at least one interface (7, 9) for connecting a reader in the event of a fault, e.g. the power supply unit (2) or the logic circuit (3), in order to read out data from the storage medium (5) using the reader, with the decoupling diode (8) ensuring that the reader only powers the storage medium (5).

2. Electrical device according to claim 1,
**characterised in that**
the storage medium (5, 10) is provided with a data link, by way of which data can be read out with the aid of the reader outside the device.

3. Electrical device according to claim 1 or 2,
**characterised in that**
the data link has the interface (7), which is accessible from outside the device (1) and which serves to connect the reader.

4. Electrical device according to one of the preceding claims, **characterised in that** the storage medium is designed as a serial read-only memory (5).

## Revendications

1. Appareil ( 1 ) électrique ayant une logique ( 3 ) et un support ( 5 ) de mémoire relié électriquement à la logique ( 3 ) et dans lequel des données sont mémorisées,
**caractérisé en ce que** le support ( 5 ) de mémoire est relié par une diode ( 8 ) de découplage à une unité ( 2 ) d'alimentation en courant qui alimente en courant le support ( 5 ) de mémoire en fonctionnement normal, et **en ce que** l'appareil ( 1 ) a au moins une interface ( 7, 9 ) de raccordement d'un appareil de lecture dans le cas d'un défaut, par exemple de l'unité ( 2 ) d'alimentation en courant ou de la logique ( 3 ), pour lire par un appareil de lecture des données dans le support ( 5 ) de mémoire, la diode ( 8 ) de découplage assurant que l'appareil de lecture n'alimente en tension que le support ( 5 ) de mémoire.

2. Appareil électrique suivant la revendication 1,
**caractérisé en ce que** le support ( 5, 10 ) de mémoire est muni d'une liaison de données par laquelle les données peuvent être lues à l'extérieur de l'appareil à l'aide de l'appareil de lecture.

3. Appareil électrique suivant la revendication 1 ou 2,
**caractérisé en ce que** la liaison de données comporte l'interface ( 7 ) qui est accessible de l'extérieur de l'appareil ( 1 ) et qui sert à raccorder l'appareil de lecture.

4. Appareil électrique suivant l'une des revendications précédentes, **caractérisé en ce que** le support de mémoire est réalisé en mémoire ( 5 ) fixe séquencée.
